# EUROPEAN PATENT SPECIFICATION

(11) **EP 2 179 803 B1**
(45) Date of publication and mention of the grant of the patent: **29.08.2018**
(21) Application number: 09445018.6
(22) Date of filing: 15.09.2009
(51) Int. Cl.: B09C 1/08, E02F 3/92, E02B 1/00, C02F 1/52, E02F 5/28

(54) **Method and device for injecting flocculants**
Verfahren und Vorrichtung zur Injektion von Flockungsmitteln
Méthode et dispositif pour l'injection des floculants

(30) Priority: 16.09.2008 SE 0801974
(43) Date of publication of application: 28.04.2010
(73) Proprietor: Carlsson, Sten-Åke, 197 91 Bro (SE); Eriksson, Lars, 803 02 Gävle (SE)
(72) Inventor: Carlsson, Sten-Åke, 197 91 Bro (SE); Eriksson, Lars, 803 02 Gävle (SE)
(74) Representative: Ehrner & Delmar Patentbyrå AB

(56) References cited:
- EP-A1- 0 369 534
- DE-A1- 3 626 618
- FR-A1- 2 785 900
- SE-C2- 507 392
- US-A- 5 700 685

## Description

### Technical field of the invention

The present invention relates to a method for injecting flocculants into the bottom sediment of lakes, seas and watercourses which involves mixing of injection water and flocculants, that the resulting mixture is injected into the interstitial water of the bottom sediment, and that the injection water and the flocculants are separated from each other prior to the mixing. The invention relates also to a device for implementing the method according to the invention.

### State of the art

From EP 0 369 534 A1 a method for treating sediment is previously known. The method involves injection of flocculants into the bottom sediment of lakes, seas and watercourses. However, there is no teaching in EP 0 369 534 A1 that the mixing of water and the substance or micro-organism takes place in conjunction with injection into the sediment.

From FR 2 785 900 A1 a method and device for mechanical, chemical and bacterial treatment is previously known. An important technical feature of FR 2 785 900 A1 is that the bottom sediment in a body of water is subjected to agitation and thereby a particulate suspension is created, the treatment being effected upon said suspension.

From US 5,700,685 A a system to reduce sediment toxicity is previously known. US 5,700,685 A teaches an agitation of the bottom sediment in conjunction with the injection of chemicals. The chemicals are supplied direct into the agitated bottom sediment, i.e. no mixture of injection water and chemicals is present.

A method and a device for immobilisation of phosphorus by flocculation of the bottom water in lakes are known from SE 507 392. That method involves using water from a lake to dilute a flocculating solution stored in a tank and leading the resulting mixture to a spreader boom provided with holes and immersed in the water. The mixture is supplied to the lake water via holes in the spreader boom. The equipment comprises means for controlling the proportioning of the mixture.

A bottom treatment device known from DE 36 26 618 comprises a number of injector pipes mounted on a rod which is itself mounted on a watercraft. In addition, further pipes arranged within each of the injector pipes are used to supply oxygen and chemical additives.

### Objects and features of the invention

A primary object of the present invention is to propose a method and a device of the kind defined in the introduction whereby the invention will achieve more effective and more controllable mixing of the flocculants with the interstitial water of the bottom sediment.

Another object of the present invention is to reduce the amount of flocculants used, through the process being more controllable.

A further object of the present invention is to control and regulate the depth below the bottom of the lake/sea/watercourse at which the injection is effected.

At least the primary object of the present invention is achieved by a method and a device having the features indicated in the independent claims set out below. Preferred embodiments of the invention are defined in the dependent claims.

### Brief description of the drawings

A preferred embodiment of the method and the device according to the present invention is described below with reference to the attached drawings, in which:
- Fig. 1: depicts a schematic front view of a device according to the present invention; and
- Fig. 2: depicts a partly sectioned view along II-II in Fig. 1.

### Detailed description of a preferred embodiment of the invention

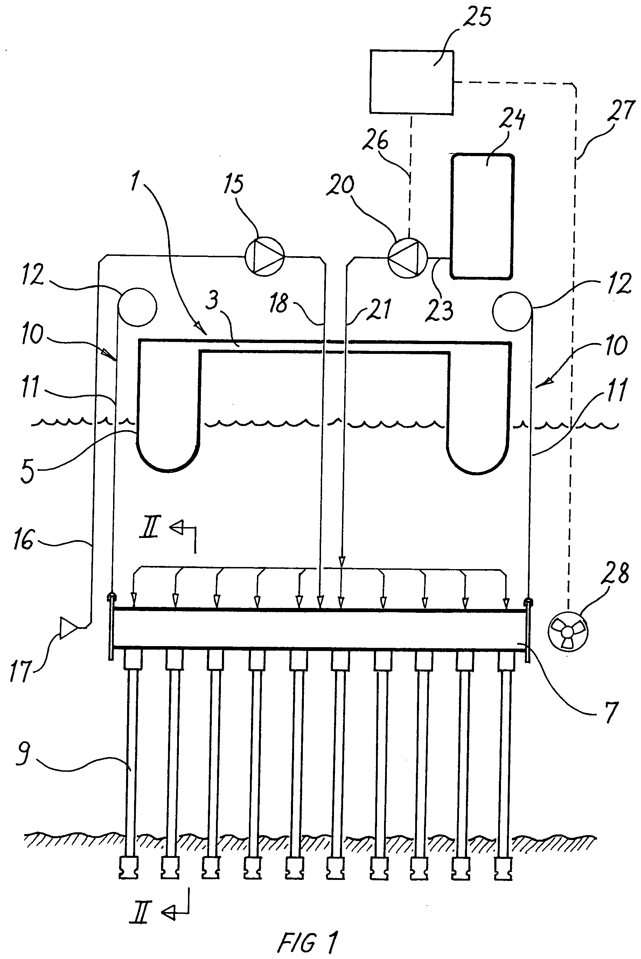

The device according to the present invention depicted in Fig. 1 comprises a watercraft 1 which in the embodiment example depicted takes the form of a platform 3 provided with pontoons 5 to render the platform 3 buoyant. The watercraft is provided with a motive power source (not depicted) of its own and has means (not depicted) which result in its having a navigation capacity of its own.

The device according to a preferred embodiment of the present invention also comprises a supporting means in the form of a spreader boom 7 and a number of injector pipes 9 mounted on the spreader boom 7, which spreader boom 7 thus serves as supporting means for the injector pipes 9. By way of non-limitative example it may be mentioned that a suitable spacing between adjacent injector pipes 9 has been found to be about 40 cm. The constructional configuration of the injector pipes 9 and their connection to the spreader boom 7 are described in more detail below.

The device according to a preferred embodiment of the present invention comprises hoisting means 10 comprising lines 11 and line wheels 12, one end of each line 11 being fastened to the spreader boom 7. The hoisting means comprise motive power sources (not depicted) for rotating the line wheels 12 so that the spreader boom 7 can be caused to move upwards and downwards in the water.

The device according to the present invention also comprises a first pump 15 by which injection water is pumped up from the lake/sea via an intake line 16 and an intake 17. A first supply line 18 leads from the first pump 15 to the spreader boom 7 and the pressure at the outlet side of the first pump 15 causes injection water to propagate within and along the whole length of the spreader boom 7. This is described in more detail below.

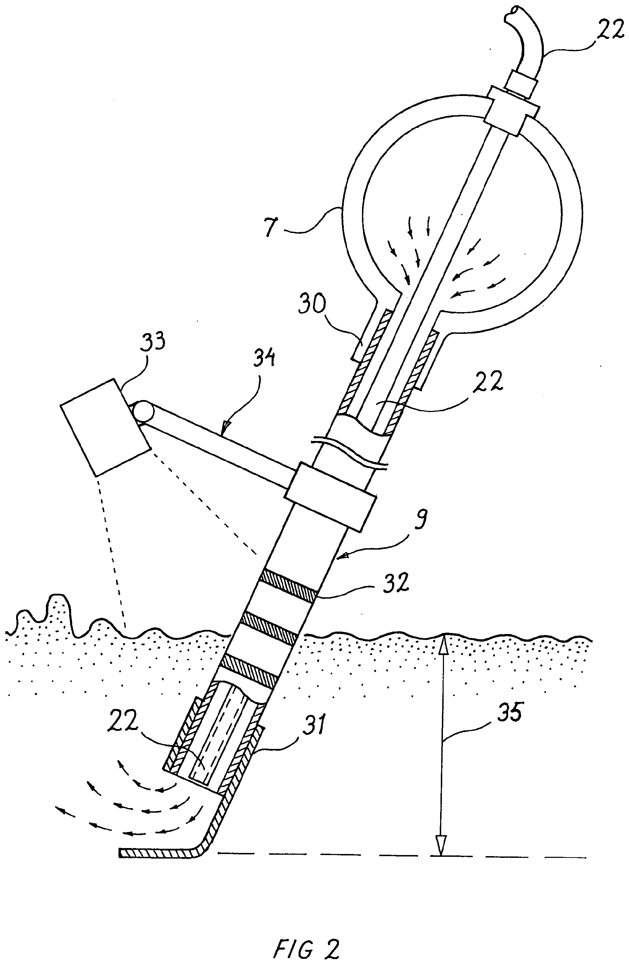

The device according to the present invention also comprises a second pump 20 which effects the supply of flocculants to the injector pipes 9 via a second supply line 21 divided into a number of the manifold lines 22, each injector pipe 9 being associated with one manifold line 22, see Fig. 2. The second pump 20 is connected on its inlet side, via a third line 23, to a flocculant tank 24.

The device according to an embodiment of the present invention also comprises a control unit 25 connected to the second pump 20 via a first cable 26. A speed sensor 28 is also connected to the control unit 25 via a second cable 27.

Fig. 2 depicts in more detail how the spreader boom 7 is connected to an injector pipe 9 which has its upper end accommodated in a socket 30 of the spreader boom 7. The connection between the upper end of the injector pipe 9 and the socket 30 may for example take the form of a push fit or a threaded connection.

The manifold line 22 associated with each injector pipe 9 extends through the spreader boom 7 and continues within the injector pipe 9 to the region of the free end of the injector pipe 9. The ends of the injector pipe 9 and the associated manifold line 22 are preferably situated in a common plane which is perpendicular to the longitudinal direction of the injector pipe 9 and the manifold line 22. The fact that the manifold line 22 has a smaller diameter than the injector pipe 9 means that there is space for injection water present in the spreader boom 7 to flow within the injector pipe 9, outside the manifold line 22, resulting in mixing of injector water and flocculants in the region of the free end of the injector pipe 9.

As illustrated in Fig. 2, a deflector nozzle 31 is according to the invention attached to the injector pipe 9 at the latter's free end. The function of the deflector nozzle 31 is to deflect the outflowing mixture of injector water and flocculants so as to achieve good spreading in and mixing with the interstitial water of the bottom sediment.

As illustrated in Fig. 2, the injector pipe 9 is provided with an external graduation 32 in the region of the lower end of the injector pipe 9. This graduation 32 is intended to be read off by video cameras 33 which form part of the device and are mounted on certain of the injector pipes 9 via a mounting means 34 and are articulable relative to the mounting means 34. Video cameras 33 are preferably mounted on the two outermost injector pipes 9. The video cameras 33 are connected in a suitable manner to the control unit 25 so that personnel on the watercraft can see the graduation 32 on a screen or the like. The graduation 32 indicates the depth 35 below the upper surface of the bottom sediment at which the lower end of the injector pipe 9 is situated.

The device described above functions with advantage in the following manner. When a water region is to be treated, the device according to the present invention is conveyed to the respective water region, which operation may take place in many different ways. The device may be conveyed by land or be towed through the water. It is also conceivable for the device to be conveyed to the respective water region by its own motive power source.

When the device according to the present invention is in the water region which is to be treated, the spreader boom 7 is immersed so that the free ends of the injector pipes 9 are at a suitable depth 35 below the upper surface of the bottom sediment. Setting the spreader boom 7/injector pipes 9 is done with the assistance of the video cameras 33 filming the graduation 32, which is read off by an operator on a screen on the watercraft 1. The fact that the watercraft will normally be in motion during the setting of the spreader boom 7 means that the injector pipes 9 will trail after the watercraft 1, resulting in the injector pipes 9 assuming the oblique position depicted in Fig. 2.

When the spreader boom 7/injector pipes 9 are correctly set, flocculants are supplied to the bottom sediment. This is with advantage done in such a way that injection water is pumped up from the water region by the first pump 15 and supplied to the spreader boom 7, resulting in the whole length of the spreader boom 7 being filled with injection water. In addition, the injection water will also flow down through the injector pipes 9 and out at their free ends. At the same time, the second pump 20 supplies flocculants via the second supply line 21 and the manifold lines 22 to the free ends of the injector pipes 9, where the flocculants are ejected. The result is mixing of flocculants and injection water at the free ends of the injector pipes 9. In this context it should be noted that it is extremely advantageous that the mixing of flocculants takes place at the free ends of the injector pipes 9, since flocculation of the respective mixture is instantly initiated. It is therefore constructionally advantageous that the manifold lines 22 lead out at the free ends of the injector pipes 9.

Via the control unit 25, the operator can regulate the amount of flocculants pumped per unit time to the free ends of the injector pipes 9. The concentration of the mixture of injection water and flocculants which is discharged via the free ends of the injector pipes 9 can thus also be regulated. A further regulating facility afforded by the device according to the present invention is the travel speed of the watercraft 1. A preferred way of keeping the concentration substantially constant is to cause the flow of the pumps to be controlled by the speed of the watercraft, whereby increasing speed of the watercraft results in an increase in the flow of the pumps. The presence of the deflector nozzles 31 at the free ends of the injector pipes 9 provides assurance that the mixture is diverted horizontally/obliquely upwards and achieves good spreading in the interstitial water of the bottom sediment.

### Conceivable modifications of the invention

It is possible within the scope of the present invention to conceive of alternative means for raising and lowering the supporting means/spreader boom 7. Hydraulic cylinders may be mentioned by way of non-limitative example.

The constructional configuration of the supporting means/spreader boom 7 and the connection of the manifold line 22 may also be configured in various different ways within the scope of the present invention. Thus it is possible within the scope of the present invention to conceive of the supporting means merely supporting the injector pipes 9 and having no distribution function as regards distributing injection water to the injector pipes 9. The distribution may be achieved in some other way, e.g. via separate lines to the injector pipes 9. Nor is it necessary for the supporting means to be disposed below the water surface, since it is conceivable for it to be disposed on the watercraft.

Watercraft in the present context means various types of boats, ships, floats etc. which are appropriate for the respective purpose. The enumeration is merely by way of example.

## Claims

1. A method for injecting flocculants into the bottom sediment of lakes, seas and watercourses which involves mixing of injection water and flocculants, that the resulting mixture is injected into the interstitial water of the bottom sediment, and that the injection water and the flocculants are separated from each other prior to the mixing,
**characterized in that** the mixing of the injection water and the flocculants takes place in conjunction with effecting the injection, and that the mixture of injection water and flocculants is diverted horizontally in conjunction with the injection.

2. A device for injecting flocculants into the bottom sediment of lakes, seas and watercourses, which device comprises a watercraft (1), storage space (24) for flocculants, means (15, 20) for supplying water and flocculants for injection, wherein a number of injector pipes (9), a supporting means for the injector pipes (9) and by the facts that the injector pipes (9) define an internal space for supply of injector water, that a number of manifold pipes (22) forming part of the device are connected to the supply means (20), that each of the manifold pipes (22) is accommodated within an associated injector pipe (9), that the ends of the injector pipes (9) and an associated manifold pipe (22) are situated in a common plane which is perpendicular to the longitudinal direction of the injector pipe (9) and the manifold pipe (22), that the manifold pipes (22) lead out in the region of the free ends of the injector pipes (9), and that a deflector nozzle (31) is provided at the free ends of the injector pipes (9).

3. A device according to claim 2, **characterized in that** the supporting means is below the water and that means (10) for regulating the depth of the supporting means in the water are attached to the supporting means.

4. A device according to any one of claims 2-3, **characterized in that** the injector pipes (9) are provided with an external graduation (32) and that a video camera (33) is mounted on certain of the injector pipes (9).

5. A device according to any one of claims 2-4, **characterized in that** the supporting means takes the form of a spreader boom (7).

6. A device according to claim 5, **characterized in that** the internal spaces of the injector pipes (9) communicate with the internal space of the spreader boom (7).

## Patentansprüche

1. Verfahren zur Injektion von Flockungsmitteln in das Bodensediment von Teichen, Seen und Wasserläufen, das das Mischen von Injektionswasser und Flockungsmitteln beinhaltet, dass die resultierende Mischung in das Porenwasser des Bodensediments injiziert wird, und dass das Injektionswasser und die Flockungsmittel vor dem Mischen voneinander getrennt werden,
**dadurch gekennzeichnet, dass** das Mischen des Injektionswassers und der Flockungsmittel in Verbindung mit der Durchführung der Injektion stattfindet, und dass die Mischung aus Injektionswasser und Flockungsmitteln in Verbindung mit der Injektion horizontal umgeleitet wird.

2. Vorrichtung zur Injektion von Flockungsmitteln in das Bodensediment von Teichen, Seen und Wasserläufen, wobei die Vorrichtung ein Wasserfahrzeug (1), Speicherplatz (24) für Flockungsmittel, Mittel (15, 20) zum Zuführen von Wasser und Flockungsmitteln zur Injektion aufweist,
wobei eine Anzahl von Injektorröhren (9), ein Stützmittel für die Injektorröhren (9) vorliegen, und wobei die Injektorröhren (9) einen Innenraum zur Zufuhr von Injektionswasser definieren, eine Anzahl von Verteilerröhren (22), die einen Teil der Vorrichtung bilden, mit dem Zufuhrmittel (20) verbunden sind, jede der Verteilerröhren (22) innerhalb einer zugehörigen Injektorröhre (9) untergebracht ist, sich die Enden der Injektorröhren (9) und eine zugehörige Verteilerröhre (22) in einer gemeinsamen Ebene befinden, die senkrecht zur Längsrichtung der Injektorröhre (9) und der Verteilerröhre (22) verläuft, die Verteilerröhren (22) im Bereich der freien Enden der Injektorröhren (9) ausleiten und eine Ablenkdüse (31) an den freien Enden der Injektorröhren (9) vorgesehen ist.

3. Vorrichtung nach Anspruch 2,
**dadurch gekennzeichnet, dass** das Stützmittel unter dem Wasser ist, und dass Mittel (10) zum Regulieren der Tiefe der Stützmittel im Wasser am Stützmittel angebracht sind.

4. Vorrichtung nach einem der Ansprüche 2 bis 3,
**dadurch gekennzeichnet, dass** die Injektorröhren (9) mit einer externen Gradeinteilung (32) versehen sind, und dass eine Videokamera (33) an bestimmten der Injektorröhren (9) angebracht ist.

5. Vorrichtung nach einem der Ansprüche 2 bis 4,
**dadurch gekennzeichnet, dass** das Stützmittel die Form eines Spreizauslegers (7) annimmt.

6. Vorrichtung nach Anspruch 5,
**dadurch gekennzeichnet, dass** die Innenräume der Injektorröhren (9) mit dem Innenraum des Spreizauslegers (7) in Verbindung stehen.

## Revendications

1. Procédé pour injecter des floculants dans le sédiment inférieur de lacs, de mers et de cours d'eau qui implique un mélange d'eau d'injection et de floculants, que le mélange résultant est injecté dans l'eau interstitielle du sédiment inférieur et que l'eau d'injection et les floculants sont séparés les uns des autres avant le mélange,
**caractérisé en ce que** le mélange de l'eau d'injection et des floculants a lieu conjointement avec la réalisation de l'injection et que le mélange d'eau d'injection et de floculants est dévié horizontalement conjointement avec l'injection.

2. Dispositif pour injecter des floculants dans le sédiment inférieur de lacs, de mers et de cours d'eau, lequel dispositif comprend une embarcation (1), un espace de stockage (24) pour des floculants, des moyens (15, 20) pour fournir de l'eau et des floculants pour une injection, dans lequel un certain nombre de tuyaux d'injecteur (9), un moyen de support pour les tuyaux d'injecteur (9) et par le fait que les tuyaux d'injecteur (9) définissent un espace interne pour l'alimentation en eau d'injecteur, qu'un certain nombre de tuyaux de collecteur (22) formant une partie du dispositif sont reliés au moyen d'alimentation (20), que chacun des tuyaux de collecteur (22) est reçu dans un tuyau d'injecteur associé (9), que les extrémités des tuyaux d'injecteur (9) et d'un tuyau de collecteur associé (22) sont situées dans un plan commun qui est perpendiculaire à la direction longitudinale du tuyau d'injecteur (9) et du tuyau de collecteur (22), que les tuyaux de collecteur (22) sortent dans la région des extrémités libres des tuyaux d'injecteur (9) et qu'une buse de déflecteur (31) est disposée au niveau des extrémités libres des tuyaux d'injecteur (9).

3. Dispositif selon la revendication 2, **caractérisé en ce que** le moyen de support se trouve en dessous de l'eau et que des moyens (10) pour réguler la profondeur du moyen de support dans l'eau sont fixés au moyen de support.

4. Dispositif selon l'une quelconque des revendications 2 à 3, **caractérisé en ce que** les tuyaux d'injecteur (9) sont pourvus d'une graduation externe (32) et qu'une caméra vidéo (33) est monté sur un certain tuyau d'injecteur des tuyaux d'injecteur (9).

5. Dispositif selon l'une quelconque des revendications 2 à 4, **caractérisé en ce que** le moyen de support prend la forme d'un bras d'épandeur (7).

6. Dispositif selon la revendication 5, **caractérisé en ce que** les espaces internes des tuyaux d'injecteur (9) communiquent avec l'espace interne du bras d'épandeur (7) .
